# EUROPEAN PATENT APPLICATION

(11) **EP 4 742 760 A1**
(43) Date of publication of application: **13.05.2026**
(21) Application number: 24836270.9
(22) Date of filing: 01.07.2024
(51) Int. Cl.: H04W 40/22, H04W 8/00, H04W 40/12, H04W 88/04, H04W 92/18, H04W 40/24

(54) **METHOD FOR PERFORMING RELAY COMMUNICATION IN WIRELESS COMMUNICATION SYSTEM, AND DEVICE THEREFOR**

(30) Priority: 04.07.2023 KR 20230086512; 04.07.2023 KR 20230086559; 04.07.2023 KR 20230086603
(71) Applicant: LG Electronics Inc., Yeongdeungpo-gu Seoul 07336 (KR)
(72) Inventor: BACK, Seoyoung, Seoul 06772 (KR); LEE, Seungmin, Seoul 06772 (KR); PARK, Giwon, Seoul 06772 (KR)
(74) Representative: Plasseraud IP
(86) International application number: PCT/KR2024/009202
(87) International publication number: WO 2025/009822

(57) **Abstract**

A method by which a relay terminal forwards a discovery message in a wireless communication system, and a device therefor, according to various embodiments, are disclosed. Disclosed are the method and the device therefor, the method comprising the steps of: receiving a first discovery message for a multi-hop relay; and determining whether the first discovery message is forwarded on the basis of a first time stamp and a time budget included in the first message.

## Description

### TECHNICAL FIELD

The present disclosure relates to a method and apparatus for forwarding a discovery message for multi-hop display by a relay user equipment (UE) in a wireless communication system.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

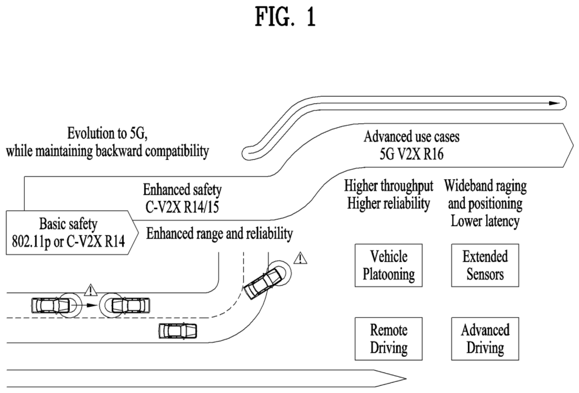

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

The object of the present disclosure is to provide a method of performing relay communication more accurately and efficiently.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

According to an aspect, a method for forwarding a discovery message by a relay user equipment (UE) in a wireless communication system may include receiving a first discovery message for multi-hop relay, and determining whether to forward the first discovery message, based on a first time stamp and a time budget included in the first message.

Alternatively, based on a remaining time budget, which is the time budget minus a difference value between the first time stamp and a second time stamp, being greater than a specific threshold, the relay UE may forward the first discovery message.

Alternatively, based on a remaining time budget, which is the time budget minus a difference value between the first time stamp and a second time stamp, being equal to or less than a specific threshold, the relay UE may not forward the first discovery message.

Alternatively, an initial value of the time budget may be determined based on quality of service (QoS) related to a message to be transmitted between a first device and a second device connected through the multi-hop relay.

Alternatively, based on an accumulated time, which is the time budget plus a difference value between the first time stamp and the second time stamp, being less than a specific threshold, the relay UE may forward the first discovery message.

Alternatively, the relay UE may forward the first discovery message after replacing the first time stamp with the second time stamp and the time budget with the remaining time budget.

Alternatively, the first discovery message may further include a first sequence number.

Alternatively, the method may further include receiving a second discovery message including a second sequence number after forwarding the first discovery message, and based on a source device and a target device being the same between the first discovery message and the second discovery message, and the second sequence number being identical to the first sequence number, the second discovery message may not be forwarded.

Alternatively, the first discovery message may further include information about a first hop count.

Alternatively, the method may further include receiving a second discovery message including a second hop count after forwarding the first discovery message, and based on a source device and a target device being the same between the first discovery message and the second discovery message, and the second hop count being greater than the first hop count, the second discovery message may not be forwarded.

Alternatively, the multi-hop relay may be user equipment to network (U2N) relay for transmitting and receiving data between a remote UE and a network.

According to another aspect, a computer-readable recording medium having recorded thereon a program for performing the method for forwarding a discovery message for multi-hop relay may be provided.

According to another aspect, a relay UE for performing the method for forwarding a discovery message for multi-hop relay may be provided.

According to another aspect, a processing device for controlling a relay UE that performs the method for forwarding a discovery message for multi-hop relay may be provided.

According to another aspect, a method for transmitting a discovery message by a first device in a wireless communication system may include transmitting a discovery message for connection to a second device through multi-hop relay, and receiving a response message for the discovery message. The discovery message may include a first time stamp and a time budget, and a value of the time budget is determined based on QoS related to a message to be transmitted to the second device through the multi-hop relay.

According to another aspect, a first device for performing the method for transmitting a discovery message may be provided.

### ADVANTAGEOUS EFFECTS

According to embodiments of the present disclosure, relay communication may be performed more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a communication structure available in a sixth-generation (6G) system according to an embodiment of the present disclosure.
FIG. 7 illustrates an electromagnetic spectrum according to an embodiment of the present disclosure.
FIG. 8 illustrates a radio protocol architecture for SL communication.
FIG. 9 illustrates user equipments (UEs) performing V2X or SL communication.
FIG. 10 illustrates resource units for V2X or SL communication.
FIG. 11 shows an example of a BWP, based on an embodiment of the present disclosure.
FIG. 12 illustrates a procedure in which UEs perform V2X or SL communication according to a transmission mode.
FIG. 13 is a diagram for explaining the control plane procedure of L2 U2N relay (UE-to-Network Relay).
FIG. 14 is a diagram for explaining the control plane procedure of L2 U2U relay (UE-to-UE Relay).
FIGS. 15 and 16 are diagrams for explaining a procedure for UE-to-UE (U2U) relay selection without relay discovery.
FIG. 17 schematically illustrates plane protocol stacks for a L2 U2U relay.
FIG. 18 is a diagram illustrating a discovery procedure for a multi-hop relay operation.
FIG. 19 is a diagram illustrating a method for configuring a discovery message for a multi-hop relay operation.
FIG. 20 is a diagram illustrating a method for forwarding a discovery message for multi-hop relay by a relay UE.
FIG. 21 is a diagram illustrating a method for transmitting a discovery message for multi-hop relay by a first device.
FIG. 22 illustrates a communication system applied to the present disclosure.
FIG. 23 illustrates wireless devices applicable to the present disclosure.
FIG. 24 illustrates another example of a wireless device to which the present disclosure is applied.
FIG. 25 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

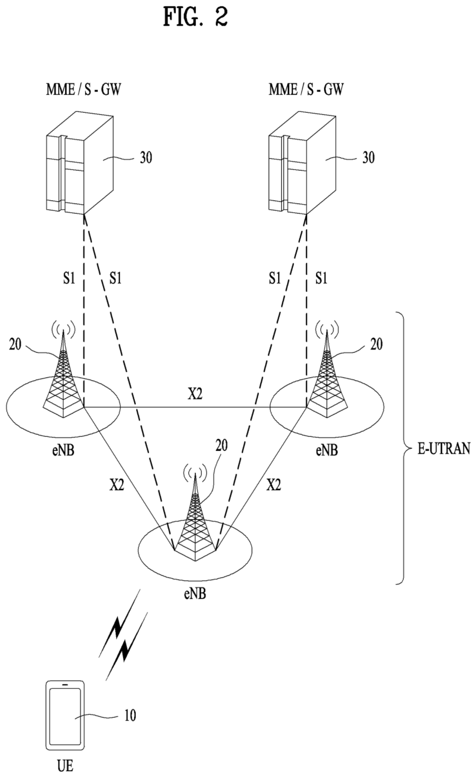

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

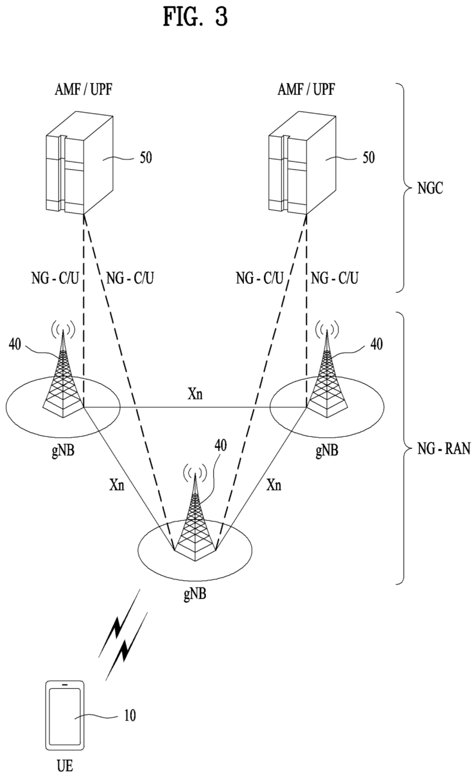

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

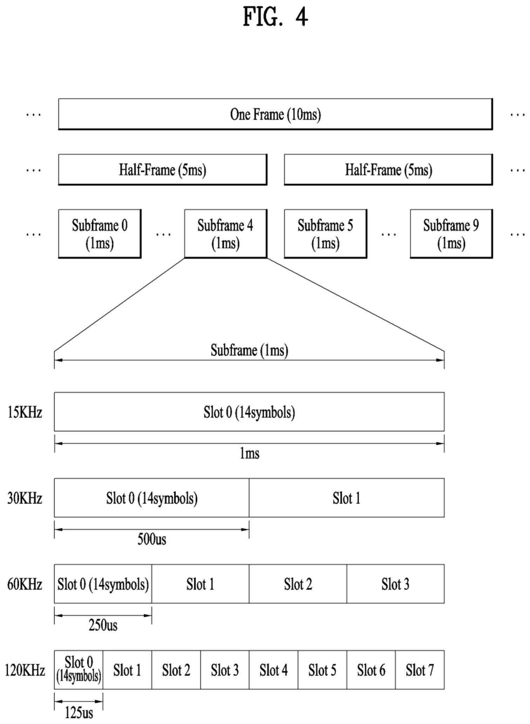

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

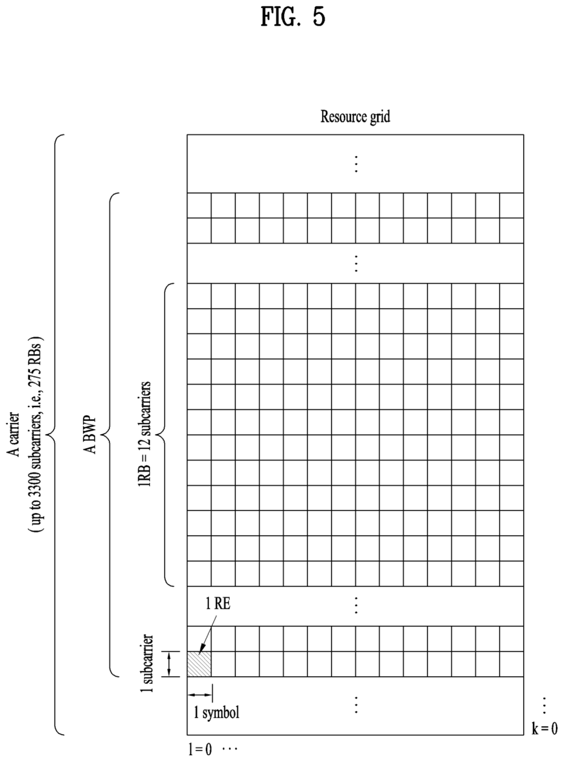

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

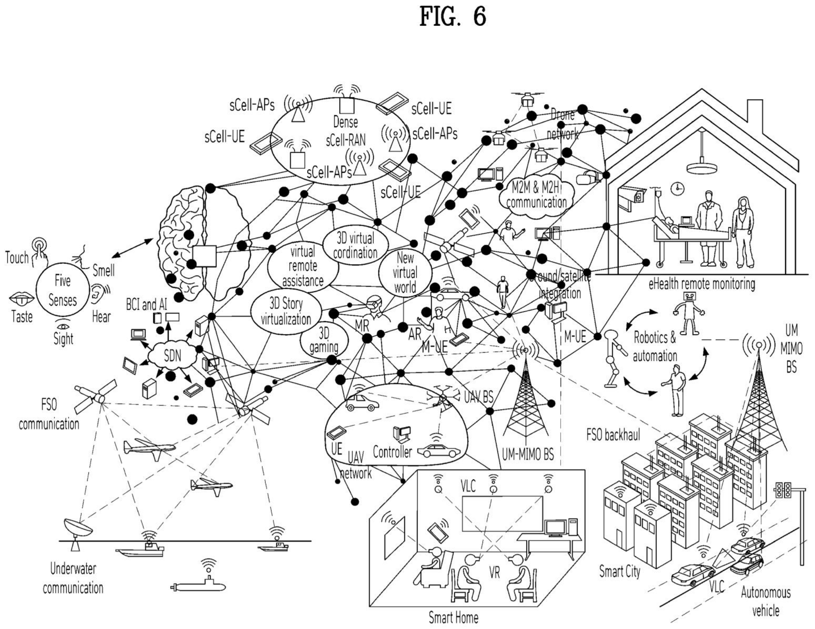

FIG. 6 illustrates a communication structure available in a sixth-generation (6G) system according to an embodiment of the present disclosure. The embodiment of FIG. 6 may be combined with various embodiments of the present disclosure.

In 6G, new network features may include the following.
- Integrated satellite network
- Connected intelligence: In contrast to previous generations of wireless communication systems, 6G may update the wireless advancement from "connected things" to "connected intelligence". Artificial intelligence (AI) may be applied in each step of communication procedures (i.e., each step of signal processing to be described later).
- Seamless integration of wireless information and energy transfer
- Ubiquitous super three-dimensional (3D) connectivity: Access to networks and core network functions pm drones and very low earth orbit satellites may enable super 3D connectivity in 6G universal.

Regarding the new network feature of 6G as described above, several common requirements may include the following:

### Small cell networks

### Ultra-dense heterogeneous networks

### High-capacity backhaul

Radar technology integrated with mobile technology: High-accuracy localization via communication (or location-based service) is one of the functionalities of the 6G wireless communication system. Therefore, radar systems will be integrated with the 6G network.

### Softwarization and virtualization

Hereinafter, the key implementation technologies of the 6G system will be described.
- Artificial intelligence (AI): Introducing AI into communication may simplify and enhance real-time data transmission. AI may determine how complex tasks are performed using numerous analyses. In other words, AI may increase efficiency and reduce processing delays. Time-consuming tasks such as handover, network selection, and resource scheduling may be performed instantly with the use of AI. AI may also play a crucial role in machine-to-machine (M2M), machine-to-human, and human-to-machine communication. In addition, AI may enable rapid communication in a brain-computer interface (BCI). AI-based communication systems may be supported by metamaterials, intelligent architectures, intelligent networks, intelligent devices, intelligent recognition radios, self-sustaining wireless networks, and machine learning.
- Terahertz (THz) communication: Increasing the bandwidth may enhance data transmission rates, which may be achieved by using sub-THz communication with wide bandwidths and applying the advanced massive multiple input multiple output (MIMO) technology. THz waves, also known as submillimeter radiation, typically represent frequency bands between 0.1 THz and 10 THz, corresponding to wavelengths in the range of 0.03 mm to 3 mm. The band range from 100 GHz to 300 GHz (sub-THz band) is considered to be the main part of the THz band for cellular communications. Adding the sub-THz band to mmWave bands increases the capacity of 6G cellular communications. The band from 300 GHz to 3 THz of the defined THz band falls within the far infrared (IR) frequency band. The band from 300 GHz to 3 THz is part of the optical band, but the band lies at the boundary of the optical band and immediately after the RF band. Therefore, this 300 GHz to 3 THz band shows similarities to RF.

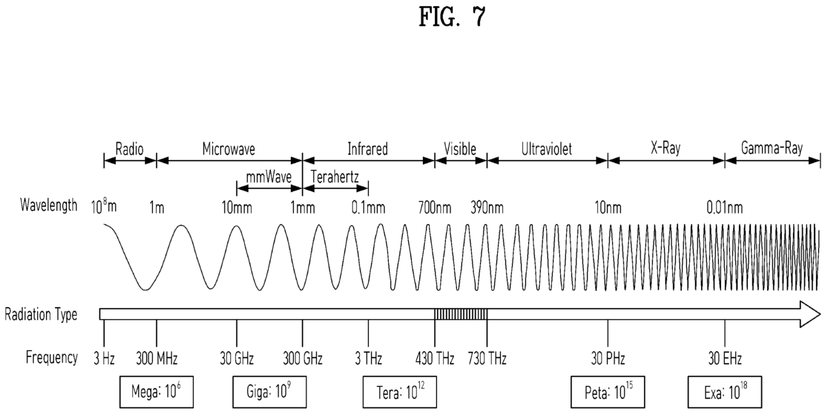

FIG. 7 illustrates an electromagnetic spectrum according to an embodiment of the present disclosure. The embodiment of FIG. 7 may be combined with various embodiments of the present disclosure. The key characteristics of THz communication include: (i) wide available bandwidths to support very high data transmission rates, and (ii) high path losses at high frequencies (highly directional antennas are indispensable). Narrow beamwidths generated by highly directional antennas reduce interference. The small wavelengths of THz signals allow a larger number of antenna elements to be incorporated into devices and BSs operating in this band. This enables the use of advanced adaptive array technologies capable of overcoming range limitations.
- Large-scale MIMO technology
- Hologram beamforming (HBF)
- Optical wireless technology
- Free-space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Blockchain
- Unmanned aerial vehicle (UAV): UAVs or drones will be crucial elements in 6G wireless communication. In many cases, high-data-rate wireless connectivity may be provided using the UAV technology. BS entities may be installed on UAVs to provide cellular connectivity. The UAV may possess specific capabilities not found in fixed BS infrastructure, such as easy deployment, robust line-of-sight links, and degrees of freedom with controlled mobility. During emergencies such as natural disasters, the deployment of terrestrial communication infrastructure may not be economically feasible, and sometimes, it is impossible to provide services in volatile environments. The UAV may easily handle such situations. The UAV will represent a new paradigm in wireless communication. This technology facilitates the three fundamental requirements of wireless networks: enhanced mobile broadband (eMBB), ultra-reliable low latency communications (URLLC), and massive machine type communications (mMTC). In addition, the UAV may support various purposes such as improving network connectivity, fire detection, disaster emergency services, security and surveillance, pollution monitoring, parking monitoring, and accident monitoring. Therefore, the UAV technology is recognized as one of the most important technologies in 6G communication.
- Autonomous driving (self-driving): Vehicle-to-everything (V2X) communication, a key element in establishing autonomous driving infrastructure, refers to a technology that allows vehicles to communicate and share information with various elements on the road, such as vehicle-to-vehicle (V2V) and vehicle-to-infrastructure (V2I) wireless communications. To maximize the performance of autonomous driving and ensure high safety standards, fast transmission speeds and low-latency technologies are essential. In addition, autonomous driving in the future may involve actively intervening in vehicle operation and directly controlling vehicles in hazardous situations beyond just providing warnings or guidance messages to drivers. To accommodate the vast amount of information that needs to be transmitted and received, it is expected in 6G that autonomous driving capabilities will be maximized with faster transmission speeds and lower latency compared to 5G.

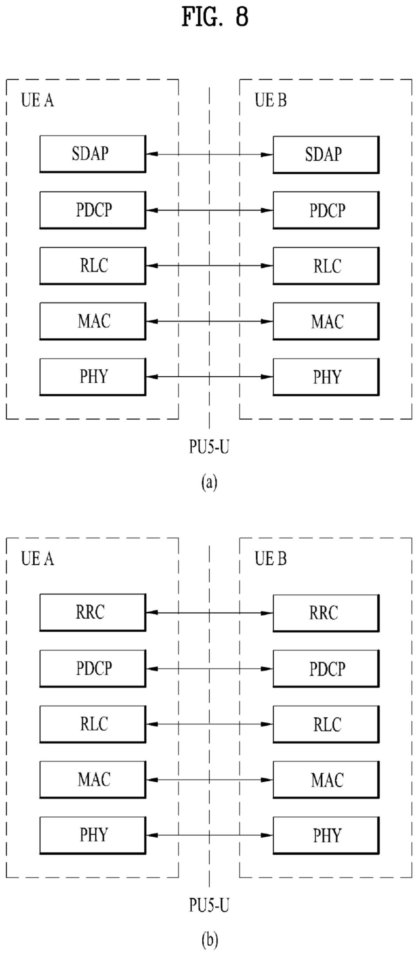

FIG. 8 illustrates a radio protocol architecture for SL communication. Specifically, FIG. 8-(a) shows a user plane protocol stack of NR, and FIG. 8-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

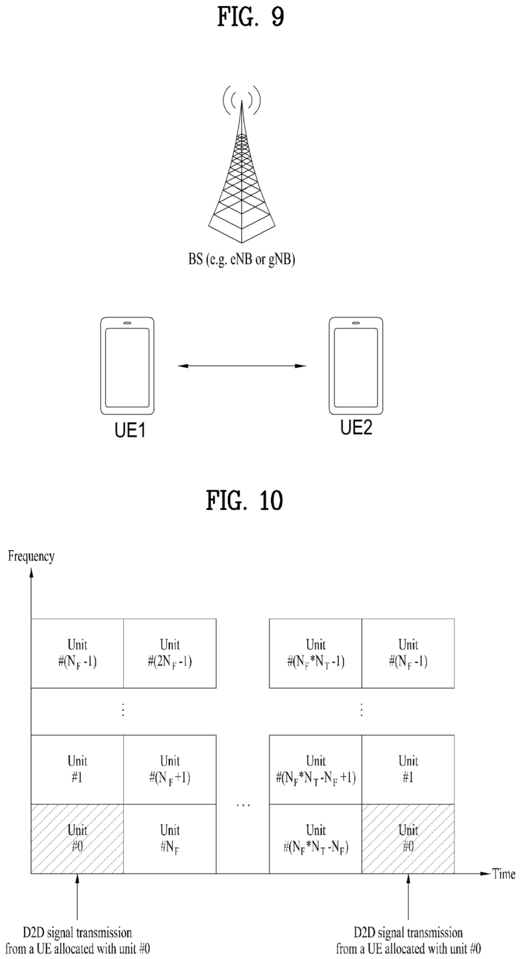

FIG. 9 illustrates UEs performing V2X or SL communication.

Referring to FIG. 9, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 10 illustrates resource units for V2X or SL communication.

Referring to FIG. 10, the frequency resources of a resource pool may be divided into N_{F} sets, and the time resources of the resource pool may be divided into N_{T} sets. Accordingly, a total of N_{F} * N_{T} resource units may be defined in the resource pool. FIG. 10 shows an exemplary case where the resource pool is repeated with a periodicity of NT subframes.

As shown in FIG. 10, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

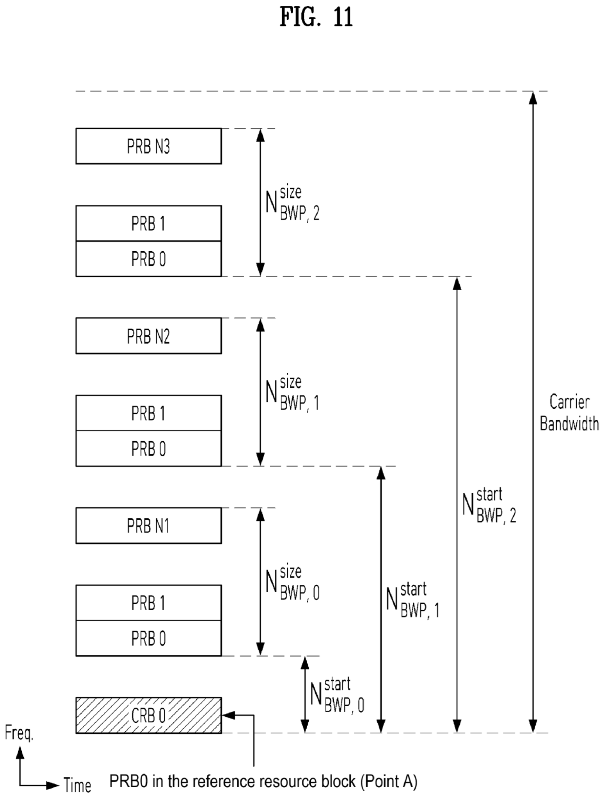

FIG. 11 shows an example of a BWP, based on an embodiment of the present disclosure. The embodiment of FIG. 11 may be combined with various embodiments of the present disclosure. It is assumed in the embodiment of FIG. 11 that the number of BWPs is 3.

Referring to FIG. 11, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described. The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

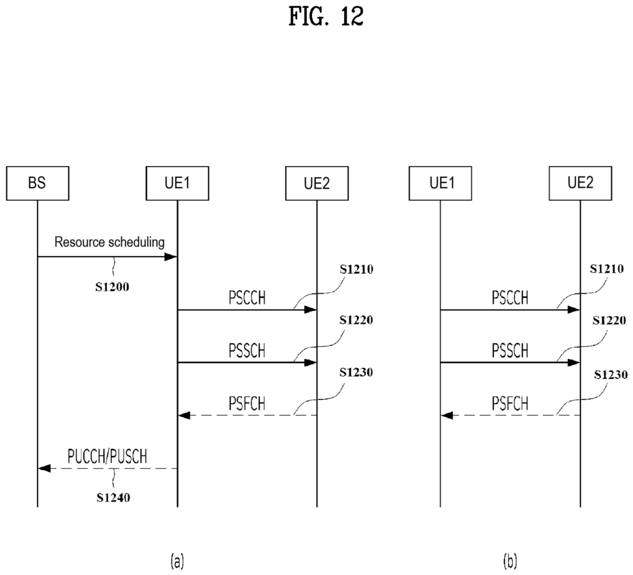

FIG. 12 illustrates a procedure for a terminal to perform V2X or SL communications in accordance with a resource allocation mode, according to one embodiment of the present disclosure. The embodiment of FIG. 12 may be combined with various embodiments of the present disclosure.

Referring to FIG. 12-(a), in LTE transmission mode 1, LTE transmission mode 3 or NR resource allocation mode 1, the BS may schedule an SL resource to be used by the UE for SL transmission. For example, in step S1200, the base station may transmit to the first terminal information associated with the SL resource and/or information associated with the UL resource. For example, the UL resource may include a PUCH resource and/or a PUSCH resource. For example, the UL resource may be a resource for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1220, the first UE may transmit a PSSCH (e.g., 2nd-stage SCI, MAC PDU, data, etc.) related to the PSCCH to the second UE. In step S1230, the first UE may receive a PSFCH related to the PSCCH/PSSCH from the second UE. For example, HARQ feedback information (e.g., NACK information or ACK information) may be received from the second UE through the PSFCH. In step S1240, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 12 , in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S1210, a first UE which has selected resource(s) from a resource pool by itself may transmit a PSCCH (e.g., sidelink control information (SCI) or 1st-stage SCI) to a second UE by using the resource(s). In step S1220, the first UE may transmit a PSSCH (e.g., 2nd-stage SCI, MAC PDU, data, etc.) related to the PSCCH to the second UE. In step S1230, the first UE may receive a PSFCH related to the PSCCH/PSSCH from the second UE.

Referring to (a) or (b) of FIG. 12, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 12, at step S1530, the first terminal may receive the PSFCH. For example, the first terminal and the second terminal may determine a PSFCH resource, and the second terminal may use the PSFCH resource to transmit HARQ feedback to the first terminal.

Referring to (a) of FIG. 12, at step S1540, the first terminal may transmit the SL HARQ feedback to the base station via PUCCH and/or PUSCH.

The above-described SL may be defined as device-to-device (D2D) communication or direct communication between UEs. In this case, the PSCCH may be defined as a physical control channel for direct communication between UEs, the PSSCH may be defined as a physical data channel or physical shared channel for direct communication between UEs, and the PSFCH may be defined as a physical feedback transport channel for direct communication between UEs.

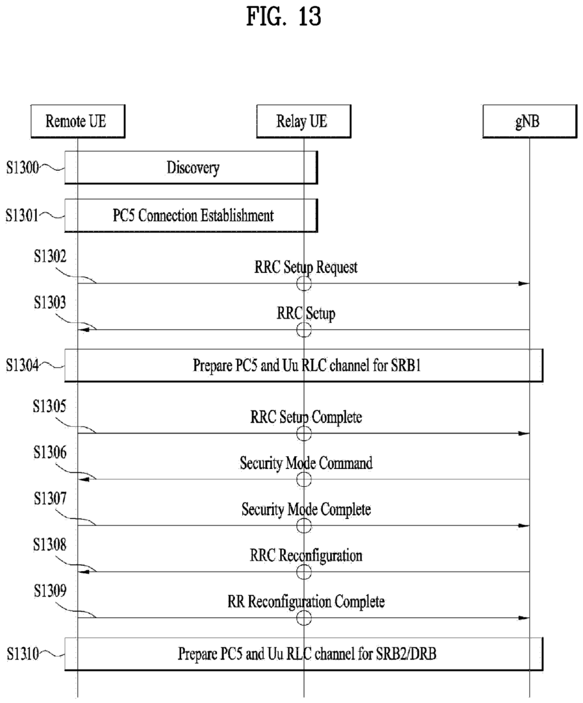

FIG. 13 is a diagram for explaining the control plane procedure of L2 U2N relay (UE-to-Network Relay).

Regarding PC5-RRC in Rel-16 NR V2X, a PC5 unicast link establishment procedure may be reused to setup a secure unicast link between the remote UE and a relay UE for Layer 2 UE-to-network (L2 U2N) relaying before the remote UE establishes a Uu RRC connection with the network through the relay UE.

When the remote UE initiates a first RRC message to establish a connection with the gNB for both in-coverage and out-of-coverage cases, the PC5 L2 configuration for transmission between the remote UE and the U2N relay UE may be based on the radio link control (RLC) and/or medium access control (MAC) configuration defined in the standard. To establish Uu signaling radio bearer 1/signaling radio bearer 2 (SRB1/SRB2) and DRBs, the remote UE follows the legacy Uu configuration procedure for L2 U2N relaying.

A specific scenario (TS 38.300) describes a control plane procedure for an L2 U2N relay, as illustrated in Table 5 below.

**[Table 5]**

| |
|---|
| The L2 U2N Remote UE needs to establish its own PDU sessions/DRBs with the network before user plane data transmission. |
| The NR sidelink PC5 unicast link establishment procedures can be used to setup a secure unicast link between L2 U2N Remote UE and L2 U2N Relay UE before L2 U2N Remote UE establishes a Uu RRC connection with the network via L2 U2N Relay UE. |
| The establishment of Uu SRB1/SRB2 and DRB of the L2 U2N Remote UE is subject to Uu configuration procedures for L2 UE-to-Network Relay. |
| The following high level connection establishment procedure in Figure 13 applies to a L2 U2N Relay and L2 U2N Remote UE: |
| -S1300, S1301: The L2 U2N Remote and L2 U2N Relay UE perform discovery procedure, and establish a PC5-RRC connection using the NR sidelink PC5 unicast link establishment procedure. |
| -S1302, S1303: The L2 U2N Remote UE sends the first RRC message (i.e., *RRCSetupRequest*) for its connection establishment with gNB via the L2 U2N Relay UE, using a specified PC5 Relay RLC channel configuration. The L2 U2N Relay UE sends the *SidelinkUEInformationNR* message to request for the dedicated configurations required to support the relay operation for the L2 U2N Remote UE. If the L2 U2N Relay UE is not in RRC_CONNECTED, it needs to do its own Uu RRC connection establishment upon reception of a message on the specified PC5 Relay RLC channel. |
| After L2 U2N Relay UE's RRC connection establishment procedure and sending the *SidelinkUEInformationNR* message, gNB configures SRB0 relaying Uu Relay RLC channel to the U2N Relay UE. The gNB responds with an *RRCSetup* message to L2 U2N Remote UE. The *RRCSetup* message is sent to the L2 U2N Remote UE using SRB0 relaying Uu Relay RLC channel over Uu and a specified PC5 Relay RLC channel over PC5. |
| -S1304: The gNB and L2 U2N Relay UE perform relaying channel setup procedure over Uu. According to the configuration from gNB, the L2 U2N Relay/Remote UE establishes a PC5 Relay RLC channel for relaying of SRB1 towards the L2 U2N Remote/Relay UE over PC5. |
| -S1305: The *RRCSetupComplete* message is sent by the L2 U2N Remote UE to the gNB via the L2 U2N Relay UE using SRB1 relaying channel over PC5 and SRB1 relaying channel configured to the L2 U2N Relay UE over Uu. Then the L2 U2N Remote UE is as in RRC_CONNECTED with the gNB. |
| - S1306, S1307: The L2 U2N Remote UE and gNB establish security following the Uu security mode procedure and the security messages are forwarded through the L2 U2N Relay UE. |
| - S1308, S1309 and S1310: The gNB sends an *RRCReconfiguration* message to the L2 U2N Remote UE via the L2 U2N Relay UE, to setup the end-to-end SRB2/DRBs of the L2 U2N Remote UE. The L2 U2N Remote UE sends an *RRCReconfigurationComplete* message to the gNB via the L2 U2N Relay UE as a response. In addition, the gNB may configure additional Uu Relay RLC channels between the gNB and L2 U2N Relay UE, and PC5 Relay RLC channels between L2 U2N Relay UE and L2 U2N Remote UE for the relaying traffic |

In the above scenario, for L2 UE-to-network relay, in addition to the connection establishment procedure:
- For the RRC reconfiguration and RRC connection release procedures, the legacy RRC procedures may be reused along with the message content/configuration design left to the WI phase.
- For the RRC reconfiguration and RRC connection release procedures, the legacy RRC procedures may be reused as a baseline by considering the above connection establishment procedure for L2 U2N relay to handle a relay-specific part, along with the message content/configuration design. The message content/configuration may be defined later.

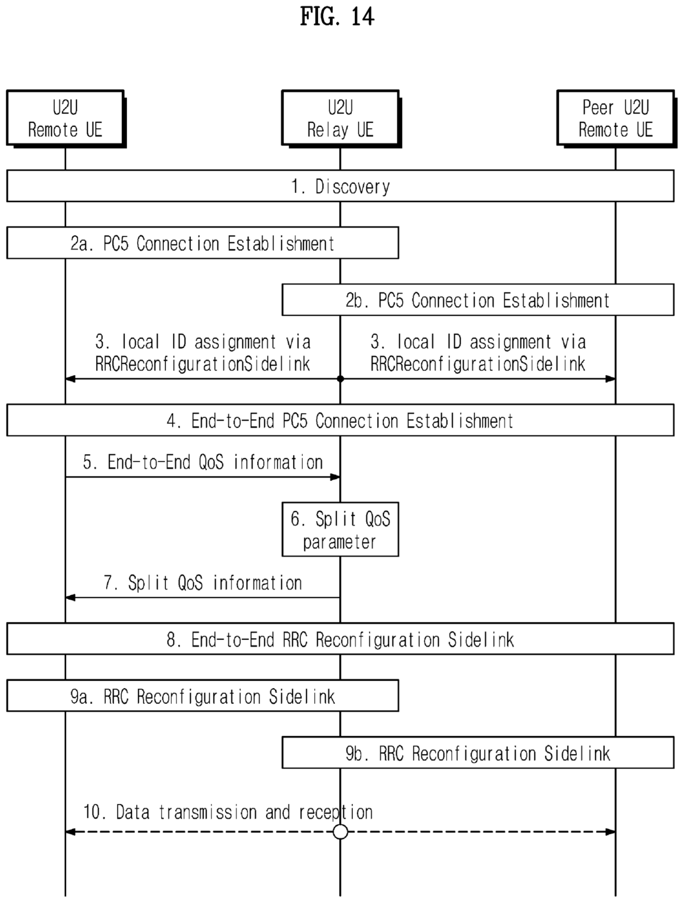

FIG. 14 is a diagram illustrating a control plane procedure for L2 UE-to-UE (U2U) relay.

The control plane procedure for L2 U2U relay may be defined as illustrated in Table 6 below.

**[Table 6]**

| |
|---|
| 1. The L2 U2U Remote UE, L2 U2U Relay UE, and peer L2 U2U Remote UE perform discovery procedure or integrated discovery procedure. |
| 2a. The L2 U2U Remote UE establishes/modifies a PC5-RRC connection with the selected L2 U2U Relay UE (i.e., as specified in TS 23.304 [48]). |
| 2b. The L2 U2U Relay UE establishes/modifies a PC5-RRC connection with the peer L2 U2U Remote UE (i.e., as specified in TS 23.304 [48]). |
| 3. The L2 U2U Relay UE allocates two local IDs and the two local IDs are delivered via *RRCReconfigurationSidelink* message to each of the L2 U2U Remote UEs: one local ID to identify the L2 U2U Remote UE, the other local ID to identify the peer L2 U2U Remote UE. When the local IDs are delivered, an L2 ID of the peer L2 U2U Remote UE is also delivered to the U2U Remote UE for making the association between the local ID and the L2 ID of the peer U2U Remote UE. |
| 4. The L2 U2U Remote UE establishes end-to-end PC5-RRC connection with the peer L2 U2U Remote UE via the L2 U2U Relay UE. For the end-to-end connection establishment, fixed indexes (i.e., 0/1/2/3) are defined for end-to-end SL-SRB 0/1/2/3 respectively, and specified PC5 Relay RLC Channel configuration is used on each hop. The sidelink UE capability is exchanged between the L2 U2U Remote UEs via PC5-RRC (e.g., SL-SRB3) message. |
| *5.* The L2 U2U Remote UE sends to the L2 U2U Relay UE all the QoS profiles for the end-to-end QoS flows via PC5-RRC message. |
| 6. The L2 U2U Relay UE performs QoS split only for PDB. |
| NOTE: It is up to L2 U2U Relay UE implementation on how to split PDB. |
| 7. The L2 U2U Relay UE sends the split QoS value (i.e., PDB) via PC5-RRC message to the L2 U2U Remote UE. |
| 8. The L2 U2U Remote UE or the serving gNB of the L2 U2U Remote UE derives the PDCP and SDAP configuration for end-to-end SL-DRB. The L2 U2U Remote UE provides the portion of the configuration related to reception to the peer L2 U2U Remote UE using end-to-end *RRCReconfigurationSidelink* messages. The end-to-end bearer IDs for SL-SRB and SL-DRB are used as input for the L2 U2U Relay ciphering and integrity protection at SL PDCP. |
| 9a. The L2 U2U Remote UE or the serving gNB of the L2 U2U Remote UE derives the first hop configuration (e.g. PC5 Relay RLC Channel configuration) for SL-DRB, The L2 U2U Remote UE provides the L2 U2U Relay UE with the configuration related to receiving on the first hop (i.e., Rx by the relay UE), using per-hop *RRCReconfigurationSidelink* message. |
| 9b. The L2 U2U Relay UE or the serving gNB of the L2 U2U Relay UE derives the second hop configuration (e.g. PC5 Relay RLC Channel configuration) for each SL-DRB. The Relay UE provides the peer L2 U2U Remote UE with the configuration related to receiving on the second hop (i.e., RX by the peer remote UE), using per-hop *RRCReconfigurationSidelink* message. |
| 10. The L2 U2U Remote UE and the peer L2 U2U Remote UE transmit or receive data via L2 U2U Relay UE |

Herein, a PC5 connection or direct connection between the U2U remote UE and the U2U relay UE may be defined as a first hop connection, and a PC5 connection or direct connection between the U2U relay UE and the peer U2U remote UE (or the target remote UE) may be defined as a second hop connection.

A method for performing U2U relay selection without a discovery procedure will be described below.

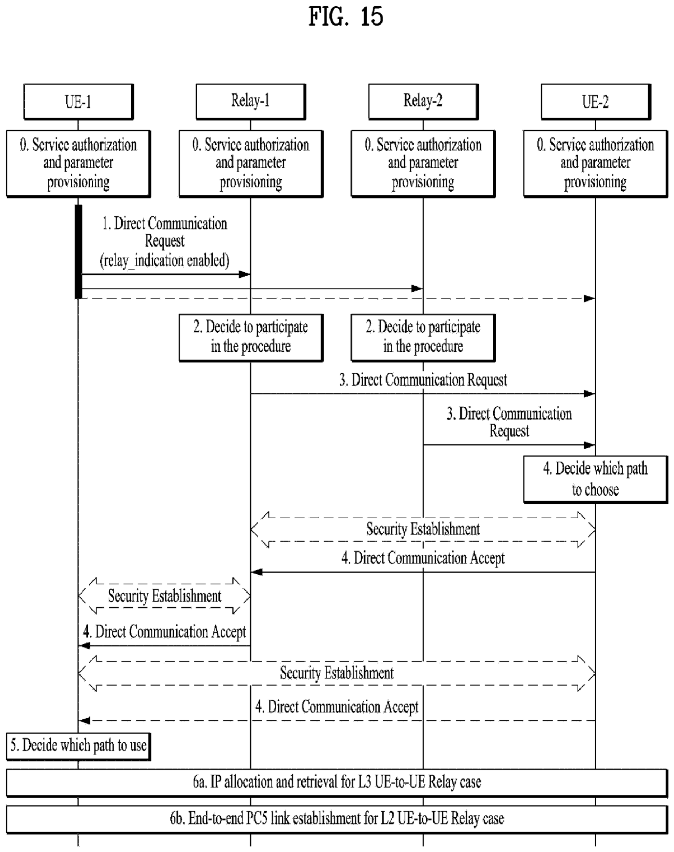

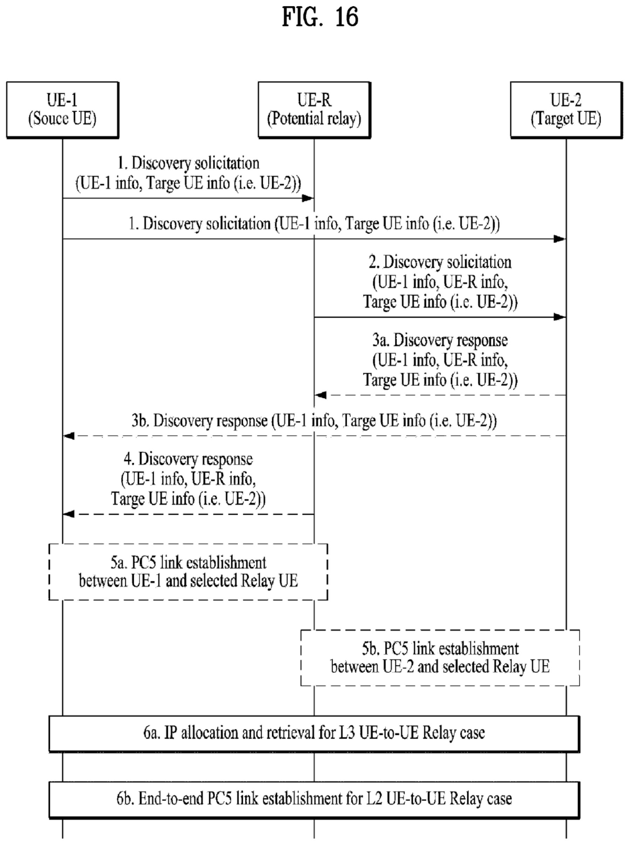

FIGS. 15 and 16 are diagrams for explaining a procedure for UE-to-UE (U2U) relay selection without relay discovery.

Referring to the specified scenario (in Clause 6.8 of TR 23.752), when a source UE desires to communicate with a target UE, the source UE may first attempt to find the target UE by transmitting a Direct Communication Request or Solicitation message including information about the target UE. If the source UE is incapable of directly reaching the target UE, the source UE may attempt to discover a U2U relay to reach the target UE which may also trigger the relay to discover the target UE. The source UE may integrate the discovery of the target UE and/or the discovery/selection of the U2U relay based on the following two alternatives.
- Alternative 1: The discovery/selection of the U2U relay may be integrated into a unicast link establishment procedure (refer to Clause 6.3.3 of TS 23.287).
- Alternative 2: The discovery/selection of the U2U relay may be integrated into a Model B direct discovery procedure.

To indicate whether a relay is capable of being used for communication, a new field may be added to the Direct Communication Request or Solicitation message. This new field may be defined as Relay_indication. If the (source) UE intends to broadcast the Direct Communication Request or Solicitation message, the request message may include Relay_indication to indicate whether the U2U relay may be used. For Release 17, it may be assumed that the value of Relay _indication is limited to a single hop.

If the U2U relay receives the request message with Relay_indication configured, the U2U relay may determine whether to forward the request message (i.e., modify the message and broadcast the message in the vicinity thereof). For instance, based on the following factors: Relay Service Code if present, Application ID, authorization policy (e.g., relay for specific ProSe services), current traffic load of the relay, and wireless conditions between the source UE and relay UE, the U2U relay may determine whether to forward the request message.

Alternatively, multiple U2U relays may be used to reach the target UE (scenario 1), or the target UE may directly receive the request message from the source UE (scenario 2). In this case, the target UE may select whether to respond in scenario 1 or scenario 2. For example, the target UE may select whether to respond in scenario 1 or scenario 2 based on the following factors: signal strength, local policy (e.g., traffic load of U2U relays), relay service code (if present), and/or operator policies (e.g., preference for always using direct communication or selectively using specific U2U relays).

Alternatively, the source UE may receive responses to the request message from multiple U2U relays or may directly receive a response to the request message from the target UE. In this case, the source UE may select the communication path (direct path or indirect path) based on the signal strength or operator policies (e.g., preference for always using direct communication or selectively using specific U2U relays).

Specifically, the alternative described above may be implemented as described in Table 7 and FIG. 15.

**[Table 7]**

| |
|---|
| 6.8.2 Procedures |
| 6.8.2.1 UE-to-UE relay discovery and selection is integrated into the unicast link establishment procedure (Alternative 1) Fig 14 illustrates the procedure of the proposed method. |
| 0. UEs are authorized to use the service provided by the UE-to-UE relays. UE-to-UE relays are authorized to provide service of relaying traffic among UEs. The authorization and the parameter provisioning can use solutions for KI#8, e.g. Sol#36. The authorization can be done when UEs/relays are registered to the network. Security related parameters may be provisioned so that a UE and a relay can verify the authorization with each other if needed. |
| 1. UE-1 wants to establish unicast communication with UE-2 and the communication can be either through direct link with UE-2 or via a UE-to-UE relay. Then UE-1 broadcasts Direct Communication Request with relay _indication enabled. The message will be received by relay-1, relay-2. The message may also be received by UE-2 if it is in the proximity of UE-1. UE-1 includes source UE info, target UE info, Application ID, as well as Relay Service Code if there is any. If UE-1 does not want relay to be involved in the communication, then it will made relay _indication disabled. |
| NOTE 1: The data type of relay _indication can be determined in Stage 3. Details of Direct Communication Request/Accept messages will be determined in stage 3. |
| 2. Relay-1 and relay-2 decide to participate in the procedure. They broadcast a new Direct Communication Request message in their proximity without relay _indication enabled. If a relay receives this message, it will just drop it. When a relay broadcasts the Direct Communication Request message, it includes source UE info, target UE info and Relay UE info (e.g. Relay UE ID) in the message and use Relay's L2 address as the source Layer-2 ID. The Relay maintains association between the source UE information (e.g. source UE L2 ID) and the new Direct Communication Request. |
| 3. UE-2 receives the Direct Communication Requests from relay-1 and relay-2. UE-2 may also receive Direct Communication Request message directly from the UE-1 if the UE-2 is in the communication range of UE-1. |
| 4. UE-2 chooses relay-1 and replies with Direct Communication Accept message. If UE-2 directly receives the Direct Communication Request from UE-1, it may choose to setup a direct communication link by sending the Direct Communication Accept message directly to UE-1. After receiving Direct Communication Accept, a UE-to-UE relay retrieves the source UE |
| information stored in step 2 and sends the Direct Communication Accept message to the source UE with its Relay UE info added in the message. |
| After step 4, UE-1 and UE-2 have respectively setup the PC5 links with the chosen UE-to-UE relay. |
| NOTE 2: The security establishment between the UE1 and Relay-1, and between Relay-1 and UE-2 are performed before the Relay-1 and UE-2 send Direct Communication Accept message. Details of the authentication/ security establishment procedure are determined by SA WG3. The security establishment procedure can be skipped if there already exists a PC5 link between the source (or target) UE and the relay which can be used for relaying the traffic. |
| *5.* UE-1 receives the Direct Communication Accept message from relay-1. UE-1 chooses path according to e.g. policies (e.g. always choose direct path if it is possible), signal strength, etc. If UE-1 receives Direct Communication Accept / Response message request accept directly from UE-2, it may choose to setup a direct PC5 L2 link with UE-2 as described in clause 6.3.3 of TS 23.287 [5], then step 6 is skipped. |
| 6a. For the L3 UE-to-UE Relay case, UE-1 and UE-2 finish setting up the communication link via the chosen UE-to-UE relay. The link setup information may vary depending on the type of relay, e.g. L2 or L3 relaying. Then UE-1 and UE-2 can communicate via the relay. Regarding IP address allocation for the source/remote UE, the addresses can be either assigned by the relay or by the UE itself (e.g. link-local IP address) as defined in clause 6.3.3 of TS 23.287 [5]. |
| 6b. For the Layer 2 UE-to-UE Relay case, the source and target UE can setup an end-to-end PC5 link via the relay. UE-1 sends a unicast E2E Direct Communication Request message to UE-2 via the Relay-1, and UE-2 responds with a unicast E2E Direct Communication Accept message to UE-1 via the Relay-1. Relay-1 transfers the messages based on the identity information of UE-1/UE-2 in the Adaptation Layer. |
| NOTE 3: How Relay-1 can transfer the messages based on the identity information of UE-1/UE-2 in the Adaptation Layer requires cooperation with RAN2 during the normative phase. |
| NOTE 4: In order to make a relay or path selection, the source UE can setup a timer after sending out the Direct Communication Request for collecting the corresponding response messages before making a decision. Similarly, the target UE can also setup a timer after receiving the first copy of the Direct Communication Request / message for collecting multiple copies of the message from different paths before making a decision. |
| NOTE 5: In the first time when a UE receives a message from a UE-to-UE relay, the UE needs to verify if the relay is authorized be a UE-to-UE relay. Similarly, the UE-to-UE relay may also need to verify if the UE is authorized to use the relay service. The verification details and the how to secure the communication between two UEs through a UE-to-UE relay is to be defined by SA WG3. |

Alternative 2 described above may be implemented as described in Table 8 and FIG. 16.

**[Table 8]**

| |
|---|
| 6.8.2.2 UE-to-UE relay discovery and selection is integrated into Model B direct discovery procedure (Alternative 2) |
| Depicted in Fig 15 is the procedure for UE-UE Relay discovery Model B, and the discovery/selection procedure is separated from hop by hop and end-to-end link establishment. |
| 1. UE-1 broadcasts discovery solicitation message carrying UE-1 info, target UE info (UE-2), Application ID, Relay Service Code if any, the UE-1 can also indicate relay _indication enabled. |
| 2. On reception of discovery solicitation, the candidate Relay UE-R broadcasts discovery solicitation carrying UE-1 info, UE-R info, Target UE info. The Relay UE-R uses Relay's L2 address as the source Layer-2 ID. |
| 3. The target UE-2 responds the discovery message. If the UE-2 receives discovery solicitation message in step 1, then UE-2 responds discovery response in step 3b with UE-1 info, UE-2 info. If not and UE-2 receives discovery solicitation in step 2, then UE-2 responds discovery response message in step 3a with UE-1 info, UE-R info, UE-2 info. |
| 4. On reception of discovery response in step 3a, UE-R sends discovery response with UE-1 info, UE-R info, UE-2 info. |
| If more than one candidate Relay UEs responding discovery response message, UE-1 can select one Relay UE based on e.g. implementation or link qualification. |
| *5.* The source and target UE may need to setup PC5 links with the relay before communicating with each other. Step 5a can be skipped if there already exists a PC5 link between the UE-1 and UE-R which can be used for relaying. Step 5b can be skipped if there already exists a PC5 link between the UE-2 and UE-R which can be used for relaying. |
| 6a. Same as step 6a described in clause 6.8.2.1. |
| 6b. For the Layer-2 UE-to-UE Relay, the E2E unicast Direct Communication Request message is sent from UE1 to the selected Relay via the per-hop link (established in steps 5a) and the Adaptation layer info identifying the peer UE (UE3) as the destination. The UE-to-UE Relay transfers the E2E messages based on the identity information of peer UE in the Adaptation Layer. The initiator (UE1) knows the Adaptation layer info identifying the peer UE (UE3) after a discovery procedure. UE3 responds with E2E unicast Direct Communication Accept message in the same way. |
| NOTE 1: For the Layer 2 UE-to-UE Relay case, whether step5b is performed before step 6b or triggered during step 6b will be decided at normative phase. |
| NOTE 2: How Relay-1 can transfer the messages based on the identity information ofUE-1/UE-2 in the Adaptation Layer requires cooperation with RAN2 during the normative phase. |
| 6.8.3 Impacts on services, entities and interfaces |
| UE impacts to support new Relay related functions. |

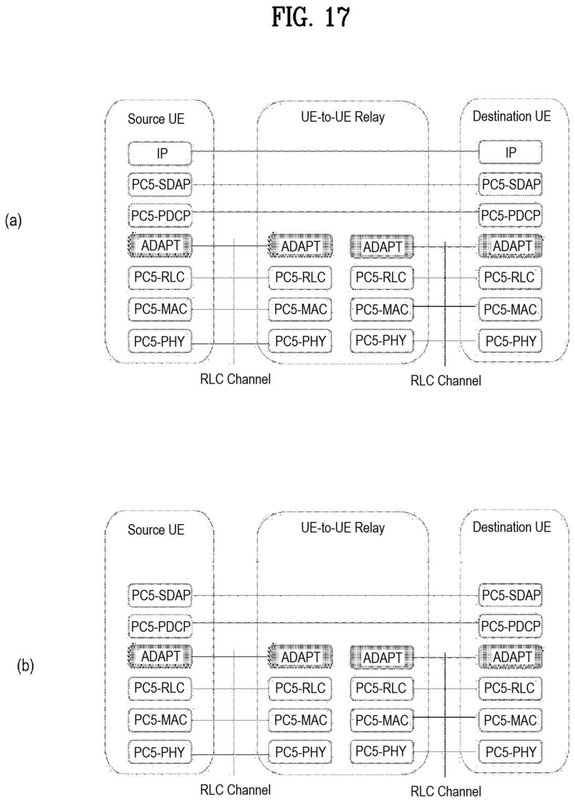

FIG. 17(a) schematically illustrates a protocol stack for an L2 U2U relay.

FIG. 17(a) illustrates a user plane protocol stack for the L2 U2U relay, while FIG. 17(b) illustrates a control plane protocol stack for the L2 U2U relay. Table 9 shows details of the architectures and protocol stacks of the L2 relay shown in FIG. 17.

**[Table 9]**

| |
|---|
| 5.5 Layer-2 Relay |
| 5.5.1 Architecture and Protocol Stack |
| For L2 UE-to-UE Relay architecture, the protocol stacks are similar to L2 UE-to-Network Relay other than the fact that the termination points are two Remote UEs. The protocol stacks for the user plane and control plane of L2 UE-to-UE Relay architecture are described in Figure 5.5.1-1 and Figure 5.5.1-2. |
| An adaptation layer is supported over the second PC5 link (i.e. the PC5 link between Relay UE and Destination UE) for L2 UE-to-UE Relay. For L2 UE-to-UE Relay, the adaptation layer is put over RLC sublayer for both CP and UP over the second PC5 link. The sidelink SDAP/PDCP and RRC are terminated between two Remote UEs, while RLC, MAC and PHY are terminated in each PC5 link. |
| For the first hop of L2 UE-to-UE Relay, |
| - The N:1 mapping is supported by first hop PC5 adaptation layer between Remote UE SL Radio Bearers and first hop PC5 RLC channels for relaying. |
| - The adaptation layer over first PC5 hop between Source Remote UE and Relay UE supports to identify traffic destined to different Destination Remote UEs. |
| For the second hop of L2 UE-to-UE Relay, |
| - The second hop PC5 adaptation layer can be used to support bearer mapping between the ingress RLC channels over first PC5 hop and egress RLC channels over second PC5 hop at Relay UE. |
| - PC5 Adaptation layer supports the N:1 bearer mapping between multiple ingress PC5 RLC channels over first PC5 hop and one egress PC5 RLC channel over second PC5 hop and supports the Remote UE identification function. For L2 UE-to-UE Relay, |
| - The identity information of Remote UE end-to-end Radio Bearer is included in the adaptation layer in first and second PC5 hop. |
| - In addition, the identity information of Source Remote UE and/or the identity information of Destination Remote UE are candidate information to be included in the adaptation layer, which are to be decided in WI phase. |

In relation to relay communication, Model A and Model B may exist for the discovery procedure. In a specific scenario (3GPP 23.304), Model A is defined as in Table 10, and Model B is defined as in Table 11.

**[Table 10]**

| |
|---|
| This procedure is applied for open and restricted 5G ProSe Direct Discovery when the ProSe enabled UE is served by NG-RAN. |
| 1. Service authorisation for 5G ProSe Direct Discovery services is performed If the UE is authorised to announce: |
| 2a. When the UE is triggered to announce, then it sends a discovery request for announcing to the 5G DDNMF in HPLMN. In addition, for restricted 5G ProSe Direct Discovery, the 5G DDNMF further interacts with the ProSe Application server for the authorization of the discovery request. |
| 3a. If the request is successful and is provided with ProSe Application Code/ProSe Restricted Code, it starts announcing on PC5 interface. |
| For ProSe restricted discovery and UE requests "on demand" announcing, ProSe Restricted Code may be provided to UE after this procedure. In this case, UE waits for the ProSe Restricted Code allocation and starts to announce the ProSe Restricted Code on PC5 after receiving it in Announcing Alert procedure. |
| NOTE 1: More details on the Access Stratum protocol of this step are provided in RAN specifications. |
| If the UE is authorised to monitor: |
| 2b. When the UE is triggered to monitor, it sends a discovery request for monitoring to the 5G DDNMF. In addition, for restricted 5G ProSe Direct Discovery, the 5G DDNMF further interacts with the ProSe Application server for the authorization of the discovery request. |
| 3b. If the request is successful and the UE is provided with a Discovery Filter consisting of ProSe Application Code(s)/ProSe Restricted Code(s) and/or ProSe Application Mask(s), it starts monitoring for these ProSe Application Codes/ProSe Restricted Codes on the PC5 interface. |
| NOTE 2: More details on the Access Stratum protocol of this step are provided in RAN specifications. |
| 4b. When the UE detects that one or more ProSe Application Code(s)/ProSe Restricted Code(s) that match the filter, it reports the ProSe Application Code(s)/ProSe Restricted Code(s) to the 5G DDNMF. |
| Non-roaming direct discovery procedures cover the case where both the "announcing UE" and "monitoring UE" are served by their respective HPLMN. Roaming direct discovery procedures cover the other cases |

**[Table 11]**

| |
|---|
| This procedure is applied for restricted 5G ProSe Direct Discovery when the ProSe enabled UE is served by NG-RAN. |
| 1. Service authorisation for 5G ProSe Direct Discovery services is performed. |
| If the UE is authorised to perform restricted 5G ProSe Direct Discovery, Model B, as a Discoveree UE, the following steps take place: |
| 2a. When the UE is triggered to perform restricted 5G ProSe Direct Discovery, Model B, it sends a discovery request to the 5G DDNMF in the HPLMN to obtain a ProSe Response Code. The 5G DDNMF further interacts with ProSe Application Server for the authorization of the discovery request. |
| 3a. If the request is successful and the UE is provided with a ProSe Response Code and an associated Discovery Query Filter(s), then the UE starts monitoring for the ProSe Query Code on PC5 interface. |
| 4a. If a received ProSe Query Code matches any of the Discovery Query Filter(s), the UE announces the associated ProSe Response Code on the PC5 interface. |
| NOTE 1: More details on the Access Stratum protocol of this step are provided in RAN specifications. |
| If the UE is authorised to perform restricted 5G ProSe Direct Discovery, Model B, as a Discoverer UE, the following steps take place: |
| 2b. When the UE is triggered to perform restricted 5G ProSe Direct Discovery, Model B, it sends a discovery request to the 5G DDNMF in the HPLMN for a ProSe Query Code. The 5G DDNMF further interacts with ProSe Application Server for the authorization of the discovery request. |
| 3b. If the request is successful and the UE is provided with a ProSe Query Code and the Discovery Response Filter(s) consisting of ProSe Response Code(s) and ProSe Application Mask(s), the UE announces the ProSe Query Code on the PC5 interface. |
| 4b. The UE starts to monitor on PC5 interface for any ProSe Response Code(s) that might match the Discovery Response Filter(s). |
| NOTE 2: More details on the Access Stratum protocol of this step are provided in RAN specifications. |
| 5b. When the UE detects a match for one or more ProSe Response Code(s), it reports the ProSe Response Code to the 5G DDNMF. |
| Non-roaming direct discovery procedures cover the case where both the Discoveree UE and Discoverer UE are served by their respective HPLMN. Roaming direct discovery procedures cover the other cases. |

Although U2U relay and a U2N relay operation based on a single hop (i.e., using one relay UE) in relation to a relay communication method and a discovery procedure have been described above with reference to FIGS. 13 to 17, the U2U relay and the U2N relay operation may also be performed based on multiple hops using a plurality of relay UEs, instead of a single relay UE. Therefore, a method for performing U2U relay and a U2N relay operation based on multiple hops using a plurality of relay UEs will be described below in detail.

A multi-hop relay operation described below is applicable not only to a U2U relay operation but also to a U2N relay operation. For example, the proposed method described below may also be applied to a U2N relay operation by replacing a source remote UE or a target remote UE with a BS (or network). For convenience, the following description is given mainly in the context of a U2U relay operation.

### Discovery Procedure for Multi-Hop Relay Operation

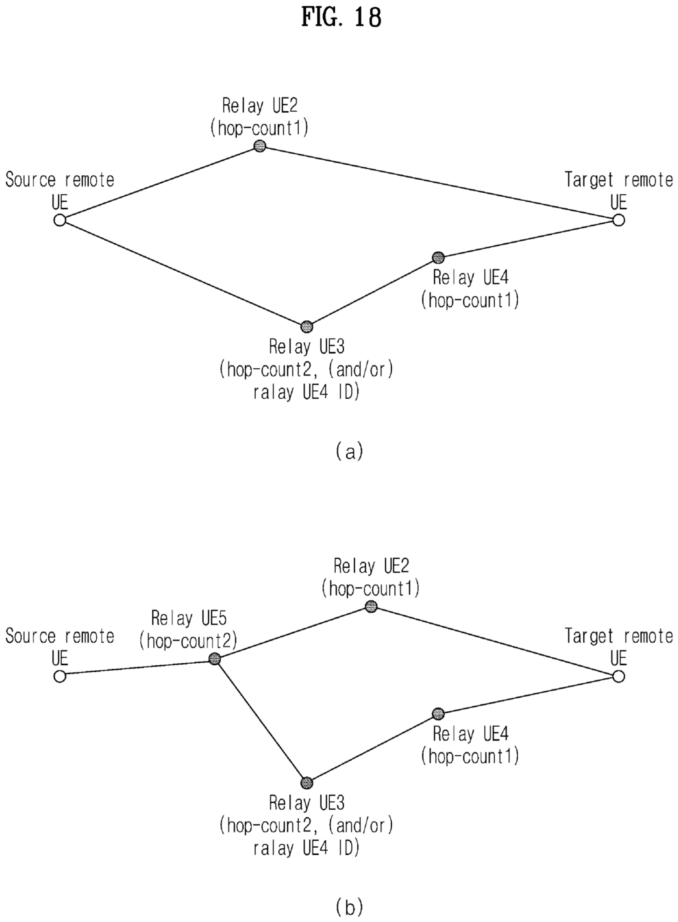

FIG. 18 is a diagram illustrating a discovery procedure for a multi-hop relay operation.

### 1. Transmission of Discovery Message (Operation of Discovery Model A/B, Integrated Discovery Model)

In a single-hop U2U relay operation, discovery model A may be a case where a relay UE transmits a discovery message including a list of IDs of accessible target remote UEs. Herein, accessibility refers to a case where a signal strength (e.g., SD-RSRP) between the relay UE and a target remote UE is greater than or equal to a predetermined threshold. The ID list may include the IDs of target remote UEs having signal strengths greater than or equal to the threshold with the relay UE. When the discovery message broadcast by the relay UE includes a target remote UE that a source remote UE intends to reach, the source remote UE may select the relay UE and perform an operation related to connection establishment for communication with the target remote UE.

In a multi-hop U2U relay operation, the discovery message transmitted (or broadcast) by each relay UE may include a hop count that may be required to reach the target remote UE. And/or, the discovery message transmitted (or broadcast) by each relay UE may include the IDs (or ID list) of other relay UEs necessary to reach the target remote UE, and information about a hop count for the relay UE (corresponding to an ID included in the ID list) to reach the target remote UE, and a relay UE ID corresponding to each hop. For example, referring to FIG. 18(a), relay UE 2 may transmit a discovery message including a hop count of 1, relay UE 3 may transmit a discovery message including a hop count of 2 and/or the ID of relay UE 4, and relay UE 4 may transmit a discovery message including a hop count of 1. (And/or) If the message passes through several other relay UEs, the discovery message may also include an SL RSRP (or SD-RSRP) value measured by each relay UE. The SL RSRP (or SD-RSRP) value measured by each relay UE may include a signal strength between the relay UE and the target remote UE and/or signal strengths between the relay UE and other relay UE required to reach the target remote UE. Alternatively, the discovery message may include a critical value (e.g., maximum or minimum value) among the signal strengths between the relay UE and the other relay UEs required to reach the target remote UE, as a representative value.

Alternatively, when the required hop count to reach the target remote UE differs for each relay UE, the discovery message may include only the smallest of the hop counts of a plurality of relay UEs. For example, referring to FIG. 18(b), relay UE 5 may determine that two hop connections or two hops are required to reach the target remote UE through a discovery message received from relay UE 2, and recognize that three hops connections or three hops are required to reach the target remote UE through a discovery message from relay UE 3. In this case, relay UE 5 may transmit a discovery message including 2, the smaller of the hop counts (2 hops, 3 hops), as a (representative) hop count value. In this case, the discovery message may also include the IDs of the connected other relay UE (the ID of relay UE 2 having the smaller hop count value of 2, out of the IDs of relay UE 2 and relay UE 3). For example, the discovery message of relay UE 5 may include 2 as a hop count value to the target remote UE and the ID of relay UE 2 as the ID of a connected other relay UE.

Alternatively, the relay UE may increase the hop count by 1 in the discovery message received from another relay UE and forward/transmit the discovery message with the increased hop count. In this case, when the hop count (e.g., the hop count increased by 1) included in the discovery message that the relay UE intends to transmit/forward is greater than or equal to a predefined threshold hop, the relay UE may drop the discovery message without forwarding. This is because too large a hop count may be required for the message to be transmitted from the source remote UE (or the target remote UE) to the target remote UE (or the source remote UE), which may not satisfy a delay requirement. For example, when a hop count in the discovery message of a specific relay UE (or a hop count increased by 1) is greater than or equal to the predefined threshold hop, the relay UE may drop the discovery message of the specific relay UE without forwarding it. Further, the relay UE may exclude the ID of the specific relay UE from the relay UE list included in its own discovery message.

In this case, the predefined threshold hop may be predefined through an RRC dedicated message and/or an SIB. Alternatively, the value of the predefined threshold hop may be defined differently according to quality of service (QoS) and/or packet delay budget (PDB) requirements. Alternatively, the predefined threshold hop may be a value determined by a higher layer of the source remote UE or the target remote UE (or the relay UE). For example, the higher layer of the source remote UE may determine a specific hop count value that may satisfy the QoS and/or PDB of a message it intends to transmit through multi-hop relay, and transmit a discovery message including the specific hop count value as the predefined threshold hop. When determining that increasing the hop count included in the received discovery message by 1 does not satisfy the predefined threshold hop, the relay UE may not forward the discovery message.

Alternatively, when the source remote UE determines a maximum total hop count that may be required (or when the source remote UE directly predetermines/predefines the maximum hop count, or when it is predetermined/predefined by an SIB/dedicated RRC message/preconfiguration), the source remote UE may transmit a discovery message that including the maximum hop count. In this case, the relay UE may forward a discovery message having a hop count value obtained by decreasing a hop count value included in a received discovery message by 1. When the hop count value in the received discovery message minus 1 is 0, the relay UE may not further transmit/forward the received discovery message. This is because when the maximum hop count is already exceeded, there is a high probability that a multi-hop relay path will not satisfy the QoS (or PDB) desired by the source remote UE.

Alternatively, when the source remote UE or the target remote UE receives a plurality of discovery messages having reception strengths (RSRP) greater than or equal to a threshold strength, the source remote UE or the target remote UE may transmit a response message to (only to) a relay UE corresponding to a discovery message having the smallest hop count value among the plurality of discovery messages.

Alternatively, a specific relay UE may receive discovery messages for the same source/target remote UE through different relay UEs. For example, after receiving and forwarding a discovery message for a source remote UE or target remote UE from relay UE A, relay UE 1 may receive another discovery message for the same source remote UE or target remote UE from relay UE B. In this case, relay UE 1 may forward the discovery message from relay UE B only if the accumulated hop count of the discovery message received from relay UE B is less than (or greater than) the accumulated hop count of the discovery message from relay UE A that was previously forwarded. Alternatively, relay UE 1 may forward the discovery message from relay UE B only if the remaining allowable hop count of the discovery message from relay UE B (i.e., the maximum hop count mentioned above, which is decreased by 1 after each hop) is greater than (or less than) the remaining allowable hop count of the discovery message from relay UE A that was previously forwarded. That is, when a relay UE sequentially receives discovery messages for the same source remote UE or target remote UE, the relay UE may forward the temporally later received discovery message (or succeeding discovery message) only if a comparison of their hop counts indicates that the succeeding discovery message has better quality in terms of delay than the previously forwarded discovery message (or preceding discovery message). Conversely, when the succeeding discovery message has lower quality in terms of delay (e.g., when the succeeding discovery message has a larger number of hops), the relay UE may drop the forwarding of the succeeding discovery message.

In this way, the proposed method may prevent a discovery message from spreading more than necessary in multi-hop relay communication by determining whether to forward the received discovery message based on a hop count included in the discovery message.

As described above, the source remote UE and the target remote UE may be replaced with each other in the proposed method described above. Further, since the proposed method described above may also be applied to multi-hop U2N relay, obviously, the proposal may be applied by replacing the source remote UE or target remote UE with a network (gNB).

Although various embodiments have been described in the context of a discovery message in the above proposed methods, this is only for convenience of description, and the methods may obviously be applied to a direct communication request (DCR)/direct communication accept (DCA) message, an SL RRC message (e.g., RRCReconfigurationSidelink or RRCReconfigurationCompleteSidelink), a discovery response message, and/or a message for general data transmission. For example, various types of messages used in multi-hop relay communication may also additionally include hop count values, and the relay UE may specify/determine a message to be forwarded among the messages, based on the hop counts included in the messages. Alternatively, a PC5 RRC message to which the above-described present disclosure is applied may also be applied restrictively to an initial RRC message (RRCReconfigurationSidelink or RRCReconfigurationCompleteSidelink).

A method for determining whether forward a received message based on a sequence number by a relay UE will be described below in detail.

### Discovery Message Configuration for Multi-Hop Relay Operation

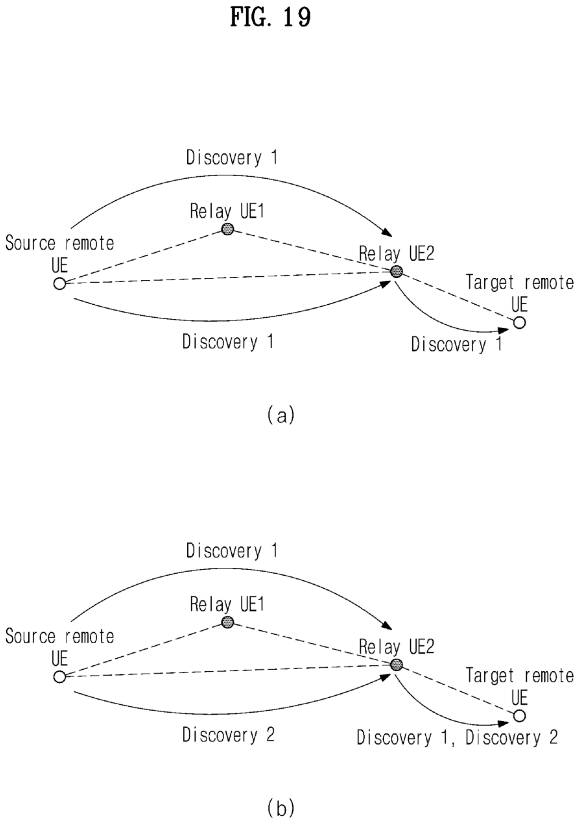

FIG. 19 is a diagram illustrating a method for configuring a discovery message for a multi-hop relay operation.

When a discovery message is transmitted through multiple hops or multiple relay UEs, a single discovery message may be received multiple times by a target remote UE. Such redundant receptions and transmissions of a single discovery message may increase channel load, and confusion may also occur in a response of the target remote UE to the discovery message.

For example, referring to FIG. 19(a), a source remote UE may transmit a discovery message to discover a target remote UE. When the source remote UE transmits discovery message 1, the target remote UE may receive discovery message 1 through relay Path 1 passing through relay UE 1 and relay UE 2, and relay Path 2 passing only through relay UE 2. In this case, there is a need to control relay UE 2 to transmit/forward the single discovery message transmitted from the source remote UE only once to the target remote UE. To this end, relay UE 2 needs to identify whether a discovery message received from relay UE 1 and the discovery message received from the source remote UE are the same message. To this end, the discovery message may (additionally) include a sequence number. For example, the source remote UE may transmit a discovery message including a specific sequence number. In this case, the relay UE may identify whether a previously received discovery message and a subsequently received discovery message are the same single discovery message based on specific sequence numbers included in the received discovery messages.

Alternatively, referring to FIG. 19(b), a source remote UE (or BS) may transmit a discovery message for the same target remote UE twice. The two discovery messages may be transmitted to relay UE 2 through different paths. In this case, relay UE 2 may recognize that the two discovery messages are different discovery messages based on sequence numbers included in the discovery messages, even if they are for the same source remote UE and target remote UE. In this case, relay UE 2 needs to forward each of the two discovery messages. For example, discovery message 1 and discovery message 2 may include different sequence numbers, and relay UE 2 may determine that the two discovery messages are different discovery messages, even though they are for the same target remote UE, based on the sequence number of each message. In this case, relay UE 2 may forward each of the two discovery messages to the target remote UE.

In this way, the proposed method allows an intermediate relay UE in a multi-hop relay operation to easily determine/identify whether a newly received discovery message is the same as one it has already forwarded by using sequence numbers, even if multiple discovery messages are received through different relay paths.

Although various embodiments have been described in the context of a discovery message in the proposed methods described above, this is only for convenience of description, and the methods may obviously be applied to a direct communication request (DCR)/direct communication accept (DCA) message, an SL RRC message (e.g., RRCReconfigurationSidelink or RRCReconfigurationCompleteSidelink), a discovery response message, and/or a message for general data transmission. For example, various types of messages used in multi-hop relay communication may also additionally include information about sequence numbers, and the relay UE may specify/determine a message to be forwarded among the messages, based on the sequence numbers included in the messages.

A method for determining whether to forward a received discovery message based on a time stamp and a time budget included in the discovery message by a relay UE will be described below in detail.

### Discovery Procedure Considering PDB in Multi-Hop Relay Operation

The following description may be applied to an operation related to discovery model A, discovery model B, or the integrated discovery model described above. Further, the following description may also be applied to a multi-hop U2N relay operation, when a source remote UE or a target remote UE is replaced with a network, as described above.

A discovery message transmitted by a source remote UE (or target remote UE) and/or a relay UE performing a multi-hop relay operation may include a time stamp and a time budget value. The time stamp may indicate a time the discovery message is transmitted, and the time budget may indicate a (remaining) PDB value. A time stamp and/or a time budget value may be included in a discovery message, a discovery response message, a DCR/DCA message, and/or an SL RRC message (e.g., RRCReconfigurationSidelink or RRCReconfigurationCompleteSidelink) for establishing an (initial) SL connection. Alternatively, a time stamp and/or a time budget value may also be included in a general data transmission.

The time stamp and/or the time budget value described above may be included in relation to an upper layer that generates a PCS-S/discovery message, but when used for a general data transmission or SL RRC connection, it may be included in the header of any one of the adaptation layer and the MAC/RLC/PHY layer of the AS layer. Alternatively, even when a discovery message is transmitted, a time stamp and/or a time budget value may be included in the header of any one of the adaptation layer and the MAC/RLC/PHY layer of the AS layer used to transmit the discovery message.

Specifically, when a time stamp and a time budget vale are used, the following operations may be performed.

For example, a discovery message transmitted by a source remote UE may include a time stamp for a transmission time and a PDB value or an (initial) time budget (and/or a maximum/minimum delay value required for a multi-hop discovery message to reach a target remote UE) required for a message to be transmitted to a target remote UE. A receiving (candidate) relay UE may replace the time stamp value in the discovery message with its own time stamp and replace the existing time budget with a remaining time budget. The remaining time budget may be a remaining value obtained by subtracting the difference between the time stamp and its own time stamp from the time budget included in the discovery message. In this case, the (candidate) relay UE may forward the discovery message with the replaced time stamp and time budget. Alternatively, when the time budget or remaining time budget included in the discovery message becomes 0 (or is less than a threshold time budget value, or is a negative value), the relay UE may drop the discovery message without forwarding it.

An initial value of the time budget (e.g., a time budget value determined/set by the source remote UE) may be set through an SIB/preconfiguration/RRC dedicated message, or it may be configured to be selected as one of multiple values based on QoS. Alternatively, the time budget value may be determined by the upper layer of the source remote UE.

Alternatively, the discovery message may include information about the time stamp and an accumulated consumed time. For example, the discovery message may include the time stamp for the transmission time of the source remote UE and information about the accumulated consumed time spent passing through the hop of each relay UE. When the accumulated consumed time is greater than or equal to a threshold accumulated time, the relay UE may drop the received discovery message without forwarding it further. The threshold accumulated time may be set differently depending on QoS, similar to the time budget.

Alternatively, the relay UE may receive discovery messages for the same source remote UE (and/or target remote UE) from a plurality of other relay UEs. In this case, the relay UE may forward only a specific discovery message having the largest remaining time budget among the discovery messages (or in the case of an accumulated time, a specific discovery message with the smallest accumulated consumed time) and store the ID of a specific relay UE that transmitted the specific discovery message. Alternatively, the relay UE may forward a discovery message including only the ID of the specific relay UE that transmitted the specific discovery message. Data transmission through the specific relay UE that transmitted the discovery message with the largest remaining time budget may have the lowest delay. Therefore, the relay UE may pre-store the ID of the specific relay UE to use it in relay selection for relay communication based on the specific discovery message. The relay UE may replace/substitute the time stamp and time budget included in the specific discovery message with its own time stamp and remaining time budget. The remaining time budget may be a remaining value obtained by subtracting the difference between the time stamp included in the specific discovery message and its own time stamp from the time budget included in the specific discovery message, as described above.

Alternatively, after first considering hop counts included in discovery messages for the same source remote UE (and/or target remote UE), the relay UE may consider (remaining) time budgets included in the discovery messages. For example, the relay UE may receive the discovery messages. In this case, the relay UE may first identify the hop count included in each of the discovery messages and forward a discovery message having the smallest hop count with priority. When the hop counts of two or more discovery messages are the same, the relay UE may forward only a specific discovery message including the largest (remaining) time budget (or in the case of an accumulated consumed time, a specific discovery message with the smallest accumulated consumed time) among the two or more discovery messages. The relay UE may store the ID of a relay UE that transmitted the specific discovery message.

Alternatively, after first considering the (remaining) time budgets included in the discovery messages for the same source remote UE (and/or target remote UE), the relay UE may consider the hop counts. For example, the relay UE may forward only a discovery message with the largest remaining time budget (with priority) among the plurality of discovery messages. Alternatively, when there are two or more discovery messages with remaining time budgets greater than or equal to a specific threshold budget among the plurality of discovery messages, the relay UE may forward only a discovery message with the smallest hop count among the two or more discovery messages. The relay UE may store the ID of a relay UE that transmitted the discovery message to be forwarded (in its memory). The discovery messages for the same source remote UE (and/or target remote UE) may be messages received sequentially by the relay UE within a specific time.

In this way, the proposed methods may ensure that forwarding of a discovery message or selection of a candidate relay UE is performed only if communication is possible within a given time budget from a source remote UE (or BS) to a target remote UE (or BS) in a multi-hop relay operation.

Although various embodiments have been described in the context of a discovery message in the proposed methods described above, this is only for convenience of description, and the methods may obviously be applied to a DCR/DCA message, an SL RRC message (e.g., RRCReconfigurationSidelink or RRCReconfigurationCompleteSidelink), a discovery response message, and/or a message for general data transmission. For example, various types of messages used in multi-hop relay communication may also additionally include information about time stamps and time budgets described above, and the relay UE may specify/determine a message to be forwarded among the messages, based on the time stamps and time budgets included in the messages.

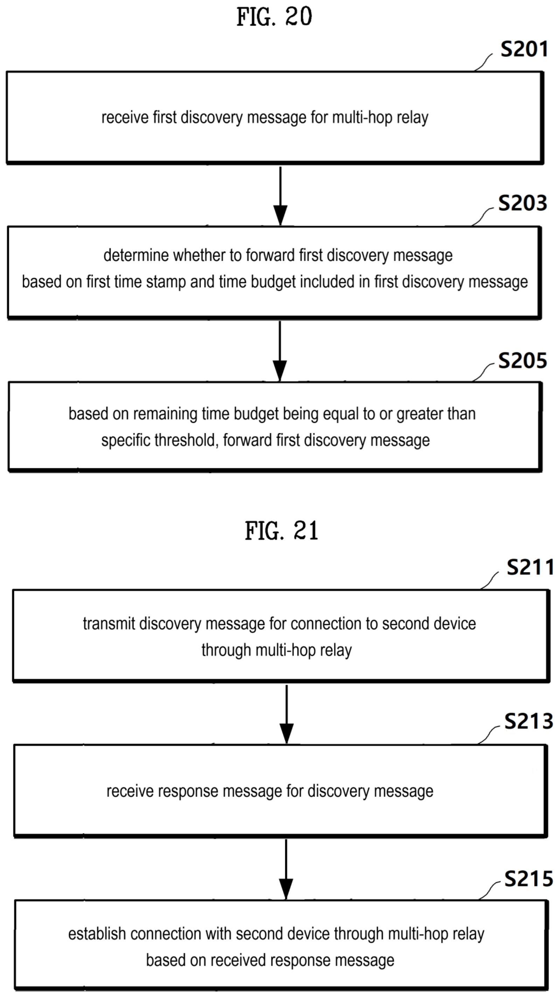

FIG. 20 is a diagram illustrating a method for forwarding a discovery message for multi-hop based relay by a relay UE.

Referring to FIG. 20, the relay UE may receive a first discovery message (or discovery signal) for multi-hop relay (S201). The multi-hop relay may be relay communication for transmitting and receiving a message between a first device (or source device) and a second device (or target device) through a plurality of relay UEs, as described above. The first device may be a remote UE (or source remote UE) or a network, and the second device may be a remote UE (or target remote UE or network). For example, the multi-hop relay may be multi-hop U2N relay for transmitting and receiving data between a remote UE and a network, or multi-hop U2U relay for transmitting and receiving data between a source remote UE and a target remote UE. The first discovery message may be a message transmitted or forwarded by another relay UE or a message transmitted by the source device (or target device).

Subsequently, the relay UE may determine whether to forward the first discovery message based on a first time stamp and a time budget included in the first discovery message (S203). The first time stamp is information about a time when the first discovery message is transmitted or forwarded, and the time budget may be information about a time required for the first discovery message to reach the second device. An initial value of the first time stamp may be a time when the first device transmits the first discovery message, and an initial value of the time budget may be determined based on QoS for data or a message that the first device intends to transmit to the second device.

Specifically, the relay UE may determine whether to forward the first discovery message based on a difference value between the first time stamp and its own time stamp and the time budget. For example, when a remaining time budget, which is the time budget minus the difference value, is greater than or equal to a specific threshold, the relay UE may forward the first discovery message. Conversely, when the remaining time budget, which is the time budget minus the difference value, is less than the specific threshold, the relay UE may not forward the first discovery message. The specific threshold may be 0 or may be determined differently according to split QoS or a split PDB related to the relay UE.

Alternatively, the time budget included in the first discovery message may be an accumulated consumed time. In this case, when the accumulated consumed time, which is the time budget plus a difference value between the first time stamp and a second time stamp, is less than a specific accumulated threshold, the relay UE may forward the first discovery message. Conversely, when the accumulated consumed time, which is the time budget plus the difference value, is greater than or equal to the specific accumulated threshold, the relay UE may not forward the first discovery message. The specific accumulated threshold may be determined based on QoS related to a message to be transmitted between the first device and the second device.

Thereafter, based on the remaining time budget being greater than or equal to the specific threshold, the relay UE may forward the first discovery message (S205). Specifically, the relay UE may forward the first discovery message after replacing the first time stamp with its own time stamp, the second time stamp, and replacing the time budget with the remaining time budget.

Alternatively, the relay UE may receive a second discovery message after forwarding the first discovery message. When a source device and a target device of the second discovery message are the same as the source device and the target device of the first discovery message, the relay UE may determine whether to forward the second discovery message based on hop counts, sequence numbers, and/or time budgets included in the first discovery message and the second discovery message. For example, only when a second sequence number included in the second discovery message is different from a first sequence number included in the first discovery message, the relay UE may forward the second discovery message. Alternatively, only when a second hop count included in the second discovery message is less than a first hop count included in the first discovery message, the relay UE may forward the second discovery message. Alternatively, only when a time budget included in the second discovery message is greater (or smaller if the time budget is an accumulated consumed time) than the time budget included in the first discovery message, the relay UE may forward the second discovery message. Alternatively, the relay UE may consider the time budget of the second discovery message after first considering the hop count of the second discovery message. For example, even if the time budget of the second discovery message is greater than the time budget of the first discovery message, when the hop count of the second discovery message is greater than the hop count of the first discovery message, the relay UE may drop the forwarding of the second discovery message. Alternatively, the relay UE may consider the hop count of the second discovery message after first considering the time budget of the second discovery message.

FIG. 21 is a diagram illustrating a method for transmitting a discovery message for multi-hop relay by a first device.

Referring to FIG. 21, the first device may transmit a discovery message for connection to a second device through multi-hop relay (S211). The first device may be a source remote UE or a network, and the second device may be a target remote UE.

Subsequently, the first device may receive a response message in response to the discovery message (S213). The response message may be a message transmitted by the second device through the multi-hop relay or a plurality of relay UEs.

Thereafter, the first device may establish a connection with the second device through the multi-hop relay based on the response message (S215).

As a discovery message including a time stamp and a time budget is transmitted in this way, the proposed disclosure may ensure that only by a relay UE capable of forming multi-hop relay within a time budget forwards a discovery message. Alternatively, the proposed disclosure may prevent excessive discovery messages from being forwarded in multi-hop relay communication. Alternatively, the proposed disclosure may prevent a single discovery message for the same source and target device from being forwarded redundantly by transmitting a discovery message including a hop count or a sequence number.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

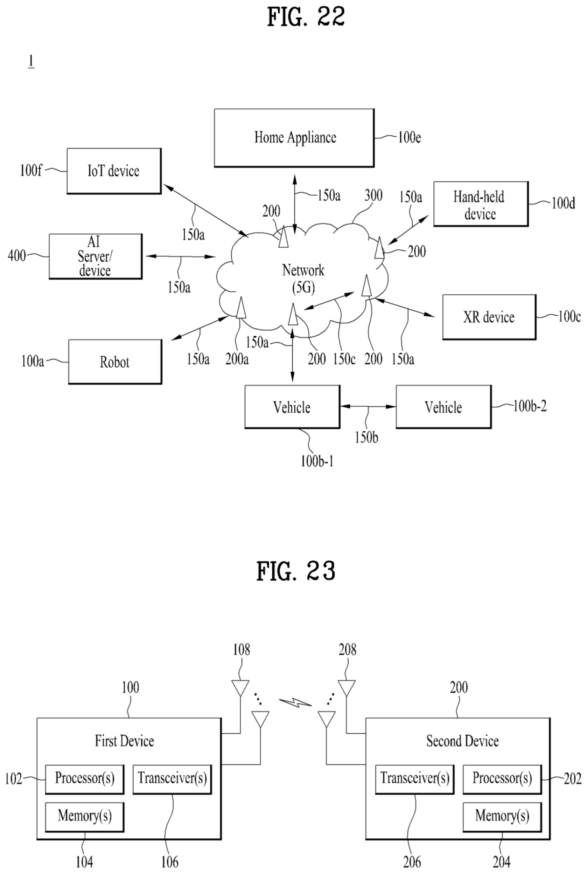

FIG. 22 illustrates a communication system applied to the present disclosure.

Referring to FIG. 22, a communication system 1 applied to the present disclosure includes wireless devices, BSs (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 23 illustrates a wireless device applicable to the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or UE 100 may include the processor 102 connected to the transceiver 106, and the memory 104. The memory 104 may include at least one program for performing an operation related to the embodiments described with reference to FIGS. 18 to 21.

The processor 102 may control the transceiver 106 to receive a first discovery message for multi-hop relay, and determine whether to forward the first discovery message based on a first time stamp and a time budget included in the first discovery message.

Alternatively, a processing device including the processor 102 and the memory 104 may be configured. In this case, the processing device may include at least one processor, and at least one memory connected to the at least one processor and storing instructions which, when executed by the at least one processor, cause a relay UE to receive a first discovery message for multi-hop relay and determine whether to forward the first discovery message based on a first time stamp and a time budget included in the first discovery message.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or BS 200 may include the processor 202 connected to the transceiver or RF transceiver 206, and the memory 204. The memory 204 may include at least one program for performing an operation related to the embodiments described with reference to FIGS. 18 to 21.

The processor 202 may control the transceiver 206 to transmit a discovery message for connection to a second device through multi-hop relay, and receive a response message for the discovery message. The discovery message may include a first time stamp and a first time budget, and a value of the first time budget may be determined based on QoS related to a message to be transmitted to the second device through the multi-hop relay.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

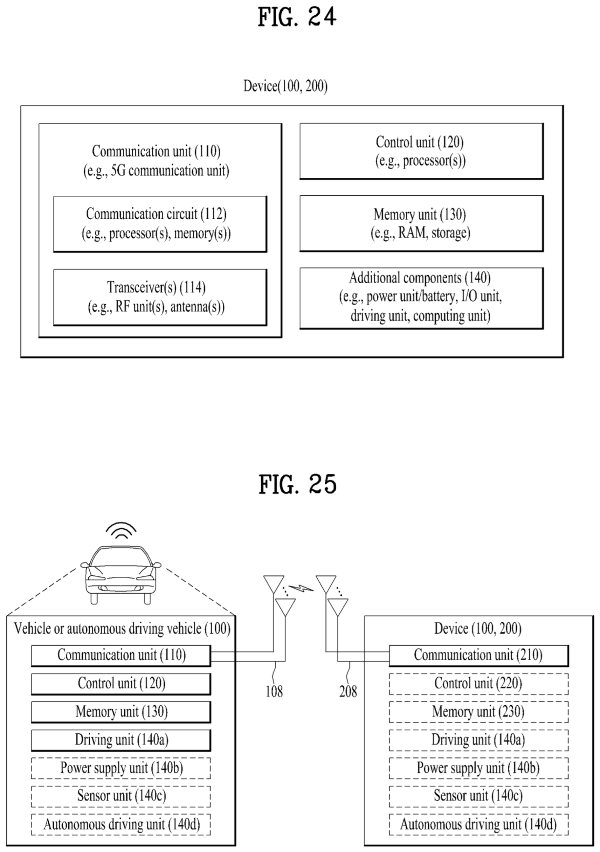

FIG. 24 illustrates another example of a wireless device applied to the present disclosure. The wireless device may be implemented in various forms according to a use-case/service (refer to FIG. 25).

Referring to FIG. 24, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 25 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 25, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are combinations of the components and features of the present disclosure in a predetermined form. Unless explicitly stated otherwise, each component or feature should be considered optional. Each component or feature may be implemented in a form not combined with other components or features. It is also possible to combine some components and/or features to constitute an embodiment of the present disclosure. The order of operations described in the embodiments of the present disclosure may be changed. Some configurations or features of one embodiment may be included in another embodiment, or may be replaced with corresponding configurations or features of another embodiment. It is apparent that claims not explicitly in a cited relationship in the claims may be combined to constitute an embodiment, or may be included as new claims through amendments after filing.

In this document, the embodiments of the present disclosure have been mainly described focusing on the signal transmission and reception relationship between the UE and the BS. The transmission and reception relationship may be identically or similarly extended to the signal transmission and reception between the UE and the relay, or between the BS and the relay. Specific operations described herein as being performed by the BS may, in some cases, be performed by the upper node. That is, in a network composed of a plurality of network nodes including the BS, various operations performed for communication with the UE may be performed by the BS or by other network nodes different from the BS. The term "base station" may be replaced with terms such as fixed station, Node B, eNode B (eNB), or access point. Similarly, the term "terminal" may be replaced with terms such as user equipment (UE), mobile station (MS), or mobile subscriber station (MSS).

The embodiments of the present disclosure may be implemented by various means, for example, hardware, firmware, software, or a combination thereof. In the case of implementation by hardware, the embodiments of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, or microprocessors.

In the case of implementation by firmware or software, the embodiments of the present disclosure may be implemented in the form of modules, procedures, functions, or the like for performing the functions or operations described above. The software code may be stored in a memory unit and driven by a processor. The memory unit may be located inside or outside the processor, and may exchange data with the processor by various means already known.

It will be apparent to those skilled in the art that the present disclosure may be embodied in other specific forms without departing from the features of the present disclosure. Therefore, the above detailed description should not be construed as restrictive in all aspects but should be considered illustrative. The scope of the present disclosure should be determined by a reasonable interpretation of the appended claims, and all modifications within the equivalent scope of the present disclosure are included in the scope of the present disclosure.

### INDUSTRIAL APPLICABILITY

The above-described embodiments of the present disclosure are applicable to various mobile communication systems.

## Claims

1. A method for forwarding a discovery message by a relay user equipment (UE) in a wireless communication system, the method comprising:
receiving a first discovery message for multi-hop relay; and
determining whether to forward the first discovery message, based on a first time stamp and a time budget included in the first message.

2. The method of claim 1, wherein based on a remaining time budget, which is the time budget minus a difference value between the first time stamp and a second time stamp, being greater than a specific threshold, the relay UE forwards the first discovery message.

3. The method of claim 1, wherein based on a remaining time budget, which is the time budget minus a difference value between the first time stamp and a second time stamp, being equal to or less than a specific threshold, the relay UE does not forward the first discovery message.

4. The method of claim 1, wherein an initial value of the time budget is determined based on quality of service (QoS) related to a message to be transmitted between a first device and a second device connected through the multi-hop relay.

5. The method of claim 2, wherein the relay UE forwards the first discovery message after replacing the first time stamp with the second time stamp and the time budget with the remaining time budget.

6. The method of claim 2, wherein the first discovery message further includes a first sequence number.

7. The method of claim 6, further comprising receiving a second discovery message including a second sequence number after forwarding the first discovery message,
wherein based on a source device and a target device being the same between the first discovery message and the second discovery message, and the second sequence number being identical to the first sequence number, the second discovery message is not forwarded.

8. The method of claim 2, wherein the first discovery message further includes information about a first hop count.

9. The method of claim 8, further comprising receiving a second discovery message including a second hop count after forwarding the first discovery message,
wherein based on a source device and a target device being the same between the first discovery message and the second discovery message, and the second hop count being greater than the first hop count, the second discovery message is not forwarded.

10. The method of claim 1, wherein the multi-hop relay is user equipment to network (U2N) relay for transmitting and receiving data between a remote UE and a network.

11. A computer-readable recording medium having recorded thereon a program for performing the method of claim 1.

12. A relay user equipment (UE) for forwarding a discovery message in a wireless communication system, the relay UE comprising:
a radio frequency (RF) transceiver; and
a processor connected to the RF transceiver,
wherein the processor controls the RF transceiver to receive a first discovery message for multi-hop relay, and determines whether to forward the first discovery message, based on a first time stamp and a time budget included in the first message.

13. A processing device for controlling a relay user equipment (UE) that forwards a discovery message in a wireless communication system, the processing device comprising:
at least one processor; and
at least one memory connected to the at least one processor and storing instructions which, when executed by the at least one processor, cause the relay UE to:
receive a first discovery message for multi-hop relay; and
determine whether to forward the first discovery message, based on a first time stamp and a time budget included in the first message.

14. A method for transmitting a discovery message by a first device in a wireless communication system, the method comprising:
transmitting a discovery message for connection to a second device through multi-hop relay; and
receiving a response message for the discovery message,
wherein the discovery message includes a first time stamp and a time budget, and a value of the time budget is determined based on quality of service (QoS) related to a message to be transmitted to the second device through the multi-hop relay.

15. A first device for transmitting a discovery message in a wireless communication system, the first device comprising:
a radio frequency (RF) transceiver; and
a processor connected to the RF transceiver,
wherein the processor controls the RF transceiver to transmit a discovery message for connection to a second device through multi-hop relay, and receive a response message for the discovery message, and
wherein the discovery message includes a first time stamp and a first time budget, and a value of the first time budget is determined based on quality of service (QoS) related to a message to be transmitted to the second device through the multi-hop relay.
